# EUROPÄISCHE PATENTANMELDUNG

(11) **EP 3 028 796 A1**
(43) Veröffentlichungstag der Anmeldung: **08.06.2016**
(21) Anmeldenummer: 15197206.4
(22) Anmeldetag: 01.12.2015
(51) Int. Cl.: B23B 49/00, B25H 1/00

(54) **POSITIONIERHILFE FÜR EINE KERNBOHRMASCHINE**

(30) Priorität: 01.12.2014 DE 102014117587
(71) Anmelder: C. & E. Fein GmbH, 73529 Schwäbisch Gmünd-Bargau (DE)
(72) Erfinder: Richt, Boris, 71282 Hemmingen (DE); Zerr, Andreas, 73663 Berglen (DE)
(74) Vertreter: Witte, Weller & Partner Patentanwälte mbB

(57) **Zusammenfassung**

Eine Positionierhilfe (24) für eine Kernbohrmaschine (10) mit einem Kernlochbohrer (22) zur Erzeugung einer hohlzylindrischen Bohrung weist eine Lichtquelle zur Erzeugung eines Zentriermusters (34) auf einem Werkstück (26) auf. Die Positionierhilfe (24) ist lösbar und zentriert an der Kernbohrmaschine (10) befestigt. Es kann sich etwa um einen Laserpointer (25) handeln, der an einem Zentrierstift (30) lösbar befestigt ist.

## Beschreibung

Die Erfindung betrifft eine Positionierhilfe für eine Kernbohrmaschine.

Unter einer Kernbohrmaschine wird im Rahmen dieser Anmeldung eine Bohrmaschine verstanden, die beim Kernbohren nur einen Hohlzylinder ausbohrt, während innerhalb des Hohlzylinders das Material nicht zerspant wird, so dass ein Kern verbleibt. Dieser kann, wenn das Werkstück vollständig durchbohrt ist, ausgestoßen werden oder muss in sonstiger Weise abgetrennt werden. In der Regel sind Kernbohrmaschinen transportabel. Sie werden auf dem Werkstück platziert und mittels eines Magneten im Bohrständer oder anderen geeigneten Mitteln (z.B. Unterdrucksaugplatte, Befestigungsschrauben etc.) auf dem Werkstück befestigt. Magnetkernbohrmaschinen werden auch zum Bohren mit zylindrischen Vollbohrern, zum Senken und zum Reiben benutzt.

Um eine Kernbohrmaschine auf der zu bohrenden Position zu positionieren, sind Zentrierstifte gebräuchlich. Der jeweilige Zentrierstift lässt sich lösbar in das Futter der Kernbohrmaschine einsetzen. Um nun eine genaue Bohrposition anzufahren, muss zum einen die Maschine auf der Oberfläche des Werkstückes verschoben werden und zum anderen mit dem Vorschubkreuz die Höhe des Zentrierstiftes verändert werden, damit dieser beim Verschieben entlang der Materialoberfläche diese nicht berührt. Dadurch werden in der Regel mehrere Positioniervorgänge nötig, um die Kernbohrmaschine exakt über der Bohrstelle zu positionieren. Dies ist ein aufwendiges Verfahren.

Vor diesem Hintergrund liegt der Erfindung die Aufgabe zugrunde, eine verbesserte Positionierhilfe für eine Kernbohrmaschine anzugeben. Ferner soll eine Kernbohrmaschine mit einer derartigen Positionierhilfe offenbart werden.

Diese Aufgabe wird erfindungsgemäß durch eine Positionierhilfe für eine Kernbohrmaschine gelöst, mit einer Lichtquelle zur Erzeugung eines Zentriermusters auf einem Werkstück, die zur lösbaren, zentrierten Befestigung an der Kernbohrmaschine ausgebildet ist.

Die Aufgabe wird auf diese Weise gelöst.

Durch die Verwendung einer Lichtquelle zur Erzeugung eines Zentriermusters auf dem Werkstück wird eine genaue Positionierung ermöglicht, ohne dass hierzu der Abstand des Bohrfutters gegenüber dem Werkstück verändert werden muss. Der Zentriervorgang wird erheblich vereinfacht.

Gemäß einer weiteren Ausgestaltung der Erfindung umfasst die Lichtquelle einen Laserpointer zur Erzeugung des Zentriermusters.

Da Laserpointer in großer Vielfalt und in allen möglichen Ausführungen kostengünstig verfügbar sind, wird hiermit eine hochpräzise, kostengünstige Zentriermöglichkeit geschaffen.

Gemäß einer weiteren Ausgestaltung der Erfindung ist die Positionierhilfe zur Befestigung an einem Zentrierstift ausgebildet.

Auf diese Weise wird die an der Kernbohrmaschine ohnehin vorgesehene zentrierte Aufnahme des Zentrierstiftes zur Zentrierung der Positionierhilfe genutzt.

Die Positionierhilfe kann hierbei dauerhaft mit dem Zentrierstift verbunden sein, so dass diese unmittelbar mit dem Ende des Zentrierstiftes in die Kernbohrmaschine einsetzbar ist.

Alternativ kann auch eine lösbare Befestigung der Positionierhilfe am Zentrierstift vorgesehen sein.

Da handelsübliche Zentrierstifte in der Regel einen einheitlichen Durchmesser haben, der z.B. 6,35 mm beträgt, kann gleichermaßen ein handelsüblicher Laserpointer als Zentrierhilfe verwendet werden, der lösbar auf den Zentrierstift aufsteckbar ist. Weitere übliche Abmessungen für Zentrierstifte sind 11,11 mm (7/16 Zoll Durchmesser) und 8,0 mm. Auch hierfür gibt es handelsübliche Laserpointer.

Die Positionierhilfe ist gemäß einer weiteren Ausgestaltung der Erfindung zur automatischen Einschaltung beim Aufstecken auf den Zentrierstift ausgebildet.

Hierdurch ergibt sich eine vereinfachte Handhabung.

Gemäß einer weiteren Ausgestaltung der Erfindung weist die Positionierhilfe an einem Ende eine Aufnahme zur Befestigung an einem Spannfutter der Kernbohrmaschine auf.

Die Positionierhilfe kann also unmittelbar in das Spannfutter der Kernbohrmaschine eingespannt werden, wodurch eine erhöhte Präzision erreicht wird. Ein gewisser Nachteil liegt darin, dass der Aufwand etwas erhöht wird, da nach der korrekten Positionierung die Positionierhilfe erst wieder ausgespannt werden muss und anschließend das Werkzeug eingespannt werden muss.

In einer weiteren Ausgestaltung der Erfindung weist die Positionierhilfe ein Lichtfeld zur Beleuchtung eines Arbeitsbereiches und ein Zentriermuster zur Zentrierung auf.

Hierdurch wird der Bedienungskomfort weiter erhöht.

Vorzugsweise weist hierbei das Zentriermuster eine hellere Ausleuchtung als das Lichtfeld zur Beleuchtung auf. Somit kann zunächst das Lichtfeld genutzt werden, um auch bei ungünstigen Beleuchtungsverhältnissen ein Grob-Positierung zu erhalten und anschließend, wenn sich die Arbeitsstelle im Bereich des Lichtfeldes befindet, das Zentriermuster zur exakten Positionierung genutzt werden.

Vorzugsweise weist die Positionierhilfe eine eigene Energiequelle, etwa in Form einer Batterie, auf.

Hierdurch ergibt sich eine erleichterte Handhabung.

Gemäß einer weiteren Ausgestaltung der Erfindung weist die Positionierhilfe eine Befestigungseinrichtung, etwa in Form eines Magneten, zur Festlegung an der Kernbohrmaschine bei Nichtgebrauch auf.

Auf diese Weise kann die Positionierhilfe an der Kernbohrmaschine verstaut werden, solange diese nicht gebraucht wird. Die Positionierhilfe ist somit jederzeit griffbereit, wenn diese benötigt wird.

Gemäß einer weiteren Ausgestaltung der Erfindung weist die Positionierhilfe eine Schalteinrichtung zum Ein- und Ausschalten der Lichtquelle, vorzugsweise zur getrennten Schaltung des Zentriermusters und eines Lichtfeldes zur Beleuchtung, auf.

Auf diese Weise kann die Lichtquelle der Positionierhilfe gezielt eingeschaltet werden, wenn diese benötigt wird. Soweit ein zusätzliches (weniger stark ausgeleuchtetes) Lichtfeld zur Beleuchtung der Arbeitsstelle vorgesehen ist, kann hierfür gegebenenfalls eine getrennte Schaltung vorgesehen sein.

Gemäß einer weiteren Ausgestaltung der Erfindung umfasst das Zentriermuster mindestens einen Laserpunkt, ein Fadenkreuz oder einen Kreis. Natürlich kann auch eine Kombination dieser Muster vorgesehen sein oder es können andere Muster verwendet werden, die zur Positionierung geeignet erscheinen.

Bei einer Kernbohrmaschine mit einer erfindungsgemäßen Positionierhilfe ist die Positionierhilfe lösbar befestigt, so dass diese vor Beginn des Bohrvorgangs entfernt werden kann.

Vorzugsweise weist die Kernbohrmaschine eine Halterung zur Aufnahme der Positionierhilfe bei Nichtgebrauch auf.

Es kann sich hierbei etwa um eine Tasche, einen Magneten, eine klemmbare Halterung oder Ähnliches handeln, wodurch eine sichere, leicht lösbare Befestigung bei Nichtgebrauch gewährleistet ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Seitenansicht einer erfindungsgemäßen Kernbohrmaschine mit Positionierhilfe;
- Fig. 2: eine vergrößerte Teilansicht der Kernbohrmaschine im Bereich des Bohrfutters mit eingesetztem Kernbohrer und zusätzlich eingesetzter Positionierhilfe, die teilweise geschnitten dargestellt ist;
- Fig. 3: eine leicht abgewandelte Ausführung einer Positionierhilfe mit einer Aufnahme an einem Ende, die der jeweiligen Aufnahme eines Bohrers entspricht und somit eine Befestigung im Austausch gegen einen Bohrer ermöglicht;
- Fig. 4: eine Aufsicht eines Beleuchtungsmusters bei eingeschalteter Lichtquelle.

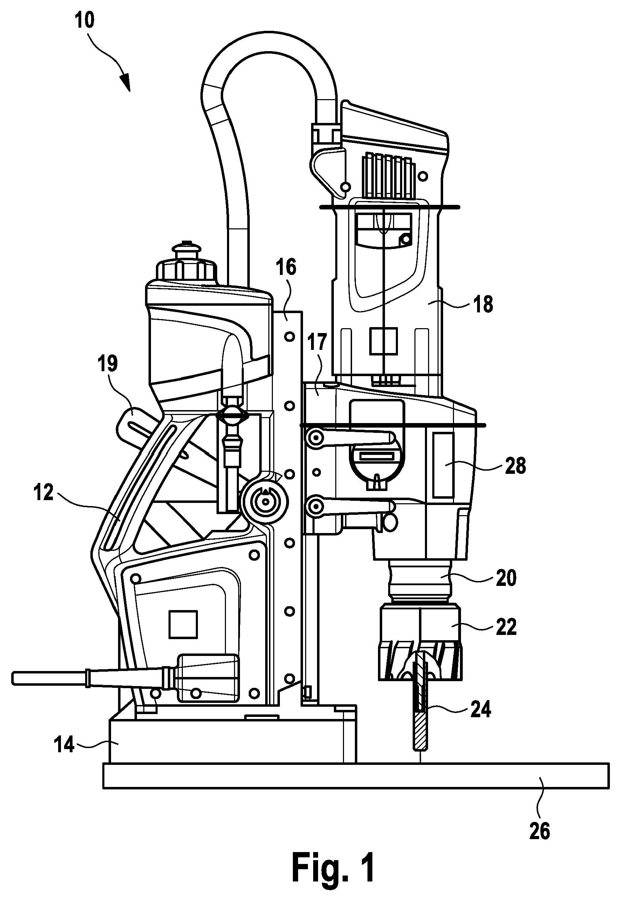

Fig. 1 zeigt eine erfindungsgemäße Kernbohrmaschine 10 mit einer Positionierhilfe 24.

Die grundsätzlich im Stand der Technik bekannte Kernbohrmaschine 10 weist einen Ständer 12 mit einem Magnetfuß 14 zur lösbaren Befestigung auf einem ferromagnetischen Werkstück 26 auf. Am Ständer 12 ist eine Führung 16 vorgesehen, entlang derer ein Schlitten 17 läuft, auf dem eine Bohreinheit 18 gehalten ist.

Die Bohreinheit 18 kann manuell durch Betätigen eines Vorschubdrehkreuzes 19 entlang der Führung 16 beim Bohren in Richtung auf das Werkstück 26 nachgeführt werden oder es kann ein automatischer Vorschub genutzt werden.

An der Bohreinheit 18 ist ein Bohrfutter 20 vorgesehen, in dem ein Bohrwerkzeug 22 zum Kernlochbohren mittels einer Schnellbefestigung gespannt werden kann. Zum Lösen, d.h. zum Herausnehmen des Bohrwerkzeugs 22 muss der betreffende Betätigungsring des Bohrfutters 20 in der Darstellung gemäß Fig. 1 lediglich nach unten gezogen werden, wodurch das Bohrwerkzeug 22 freigegeben wird und herausgezogen werden kann.

Zusätzlich ist eine Positionierhilfe 24 zur Erzeugung eines Lichtmusters zentral in das Bohrfutter 20 einsteckbar.

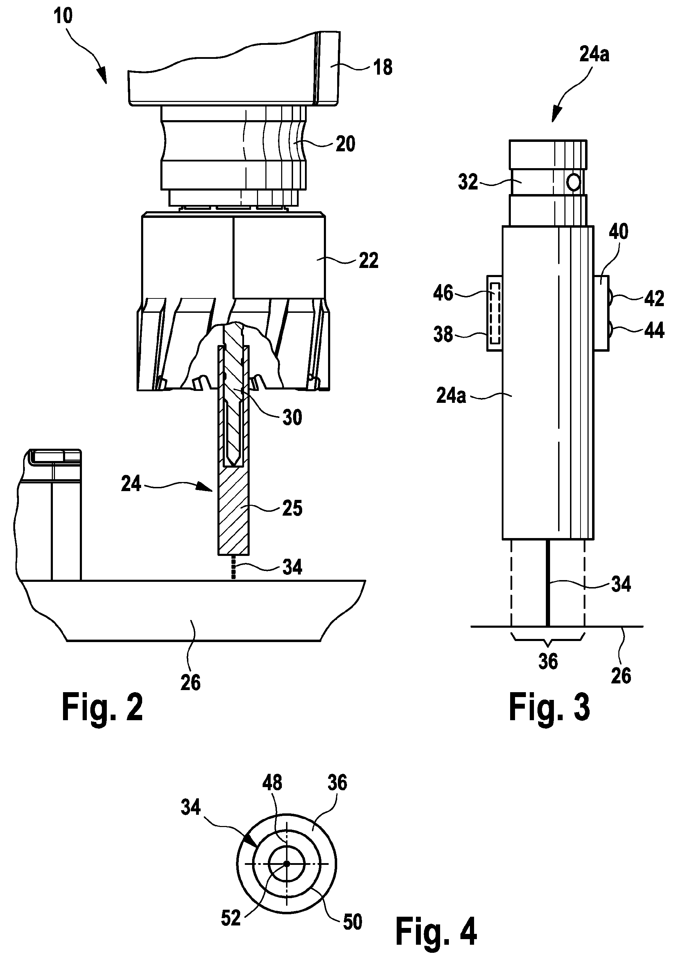

Wie näher aus Fig. 2 zu ersehen ist, weist die insgesamt mit 24 bezeichnete Positionierhilfe einen handelsüblichen Zentrierstift 30 auf, der mit seinem Ende in bekannter Weise lösbar in das Bohrfutter 20 einsetzbar ist. Auf das äußere Ende des Zentrierstiftes 30 ist eine Lichtquelle 25 in Form eines Laserpointers aufgesteckt. Die Lichtquelle 25 ist zur Erzeugung eines Zentriermusters auf dem Werkstück 26 ausgebildet, wie durch die gepunktete Linie 34 in Fig. 2 angedeutet ist.

Das auf der Oberfläche des Werkstückes 26 erzeugte Zentriermuster 34 ist beispielhaft in Fig. 4 in der Aufsicht dargestellt. Das Zentriermuster 34 kann einen zentralen Laserpunkt 52, ein Fadenkreuz 48 und/oder einen oder mehrere Kreise 50 aufweisen, um eine leichte Zentrierung zu erlauben.

Zusätzlich kann zur Ausleuchtung der Arbeitsstelle ein Lichtfeld 36 vorgesehen sein, das bei der Positionierung und Zentrierung eine genaue Ausrichtung, etwa in dunkler Umgebung, erleichtert. Vorzugsweise weist das sich über einen größeren Bereich erstreckende Lichtfeld 36 eine geringere Helligkeit auf als das Zentriermuster 34, das deutlich heller ausgebildet ist.

Somit kann die Kernbohrmaschine 10 zur Zentrierung mit Unterstützung des Lichtfeldes 36 auch bei dunkler Umgebung so weit verschoben werden, bis unter Ausnutzung des Zentriermusters 34 eine exakte Positionierung auf dem Werkstück 26 erreicht ist.

Nach der Positionierung der Kernbohrmaschine 10 wird die Positionierhilfe 24 vom Zentrierstift 30 abgezogen, so dass mit dem Bohrvorgang begonnen werden kann. Der Zentrierstift 30 verbleibt während des Kernlochbohrens im Bohrfutter 20 und dient als Ausstoßer für den bei der Kernlochbohrung erzeugten Kern.

Fig. 3 zeigt eine Abwandlung der Positionierhilfe, die insgesamt mit 24a bezeichnet ist.

Hierbei wurde auf einen Zentrierstift verzichtet. Stattdessen weist die Positionierhilfe 24a an ihrem maschinenseitigen Ende eine Aufnahme 32 auf, die der Bohreraufnahme eines Bohrwerkzeugs 22 entspricht.

Die Positionierhilfe 24a kann somit im Austausch gegen ein Bohrwerkzeug 22 in das Bohrfutter 20 eingesetzt werden.

Hierdurch ergibt sich eine erhöhte Präzision bei der Zentrierung der Positionierhilfe 24a an der Kernbohrmaschine 10.

Ein gewisser Nachteil besteht darin, dass die Positionierhilfe nicht einfach vom Zentrierstift abgezogen werden kann, sondern gegen das Bohrwerkzeug 22 ausgetauscht werden muss.

In Fig. 2 ist ferner an einer Seite der Positionierhilfe 24 eine Halterung 38 angedeutet, die zur Festlegung an der Kernbohrmaschine 10 bei Nichtgebrauch dient. Es kann sich hierbei beispielsweise lediglich um eine ebene Fläche aus einem ferromagnetischen Material handeln, die mit einem zugeordneten Magneten an der Kernbohrmaschine 10 zusammenwirkt.

In Fig. 1 ist mit 28 ein solcher Magnet beispielhaft angedeutet.

Es versteht sich, dass natürlich beliebige andere Befestigungsarten zur Festlegung an der Kernbohrmaschine 10 bei Nichtgebrauch möglich sind. So könnte beispielsweise der Magnet auch an der Halterung 38 der Positionierhilfe 24 ausgebildet sein oder es könnte beispielsweise an der Kernbohrmaschine 10 eine Tasche oder eine andere geeignete Halterung, etwa mit Clipsverschluss, vorgesehen sein.

Auf der anderen Seite der Positionierhilfe 24a ist gegenüber der Halterung 38 mit 40 eine Schalteinrichtung angedeutet, die mit einem oder zwei Schaltern 42, 44 ausgebildet sein kann, etwa um eine gemeinsame Schaltung von Lichtfeld 36 und Zentriermuster 34 oder eine getrennte Schaltung von Lichtfeld 36 und Zentriermuster 34 zu erlauben.

Weiter ist mit 46 gestrichelt eine Batterie angedeutet, bei der es sich beispielsweise um eine Knopfzelle handeln kann.

Am unteren Ende der Positionierhilfe 24a ist mit 34 das Zentriermuster in Form eines Laserstrahls angedeutet und mit den beiden seitlich gestrichelten Linien der äußere Umfang des Lichtfeldes 36, das zur Beleuchtung der Arbeitsstelle bei ungünstigen Lichtverhältnissen dient.

Mit Hilfe des Lichtfeldes 36 kann die Kernbohrmaschine während des Positioniervorgangs zunächst grob im Bereich der Arbeitsstelle positioniert werden und dann mit Hilfe des Zentriermusters präzise ausgerichtet werden.

Nach der Positionierung und endgültigen Festlegung der Kernbohrmaschine 10 wird die Positionierhilfe 24a durch Lösen des Bohrfutters 20 herausgezogen und anschließend das Bohrwerkzeug 22 eingesetzt.

## Patentansprüche

1. Positionierhilfe für eine Kernbohrmaschine (10), mit einem Kernlochbohrer (22) zur Erzeugung einer hohlzylindrischen Bohrung, mit einer Lichtquelle zur Erzeugung eines Zentriermusters (34) auf einem Werkstück (26), die zur lösbaren, zentrierten Befestigung an der Kernbohrmaschine (10) ausgebildet ist.

2. Positionierhilfe nach Anspruch 1, bei der die Lichtquelle einen Laserpointer (25) zur Erzeugung des Zentriermusters (34) umfasst.

3. Positionierhilfe nach Anspruch 1 oder 2, die zur Befestigung an einem Zentrierstift (30) ausgebildet ist.

4. Positionierhilfe nach Anspruch 3, die mit dem Zentrierstift (30) dauerhaft verbunden ist.

5. Positionierhilfe nach Anspruch 3, die mit dem Zentrierstift (30) lösbar verbunden ist.

6. Positionierhilfe nach Anspruch 5, die zur automatischen Einschaltung beim Aufstecken auf den Zentrierstift (30) ausgebildet ist.

7. Positionierhilfe nach Anspruch 1 oder 2, die an einem Ende eine Aufnahme (32) zur Befestigung an einem Bohrfutter (20) der Kernbohrmaschine (10) aufweist.

8. Positionierhilfe nach einem der vorhergehenden Ansprüche, die ein Lichtfeld (36) zur Beleuchtung eines Arbeitsbereiches und ein Zentriermuster (34) zur Zentrierung aufweist.

9. Positionierhilfe nach Anspruch 8, bei der das Zentriermuster (34) eine hellere Ausleuchtung als das Lichtfeld (36) zur Beleuchtung aufweist.

10. Positionierhilfe nach einem der vorhergehenden Ansprüche, die eine Energiequelle (46), vorzugsweise in Form einer Batterie, umfasst.

11. Positionierhilfe nach einem der vorhergehenden Ansprüche, die eine Befestigungseinrichtung (38), etwa in Form eines Magneten, zur Festlegung an der Kernbohrmaschine (10) bei Nichtgebrauch aufweist.

12. Positionierhilfe nach einem der vorhergehenden Ansprüche, mit einer Schalteinrichtung (40) zum Ein- und Ausschalten der Lichtquelle, vorzugsweise zur getrennten Schaltung des Zentriermusters (34) und eines Lichtfeldes (36) zur Beleuchtung.

13. Positionierhilfe nach einem der vorhergehenden Ansprüche, bei der das Zentriermuster (34) mindestens einen Laserpunkt (52), ein Fadenkreuz (48) oder einen Kreis (50) umfasst.

14. Kernbohrmaschine mit einer Positionierhilfe (24, 24a) nach einem der vorhergehenden Ansprüche.

15. Kernbohrmaschine nach Anspruch 14, mit einer Halterung (28) zur Aufnahme der Positionierhilfe (24, 24a) bei Nichtgebrauch.
